# EUROPEAN PATENT SPECIFICATION

(11) **EP 1 226 387 B1**
(45) Date of publication and mention of the grant of the patent: **11.08.2010**
(21) Application number: 00969072.8
(22) Date of filing: 04.10.2000
(51) Int. Cl.: E04H 12/18, F21V 21/36, E04H 12/34

(54) **ELONGATE MEMBER WITH INTERCONNECTED ROTATABLE PORTIONS**
LANGGESTRECKTES TEIL MIT ROTIERENDEN, VERBINDENDEN ELEMENTEN
MONTANT DE FORME ALLONGEE COMPORTANT DES PORTIONS ROTATIVES MUTUELLEMENT RELIEES

(30) Priority: 05.10.1999 AU PQ325199
(43) Date of publication of application: 31.07.2002
(73) Proprietor: Safe Swivel Patent Co. Pty. Ltd., Greenfields, W.A. 6210 (AU)
(72) Inventor: Pannekoek, Robert John, Mandurah, W.A. 6210 (AU)
(74) Representative: Kramer - Barske - Schmidtchen
(86) International application number: PCT/AU2000/001208
(87) International publication number: WO 2001/025687

(56) References cited:
- BE-A- 676 861
- DE-A- 2 733 571
- DE-A- 2 918 532
- DE-U- 7 426 588
- GB-A- 1 581 928
- US-A- 2 199 897
- US-A- 2 557 507
- US-A- 2 577 811
- US-A- 2 629 465
- US-A- 3 355 847

## Description

### FIELD OF THE INVENTION

The invention relates to an elongate member for locating an article in a location remote from a base plane.

It is known to provide an elongate member in the form of a pole for locating an article such as a light source in a location upwardly of and remote from a base position such as on the ground or an elevated platform. Such poles are commonly used in processing plants and refineries for illuminating the plant at night.

At present, one method of servicing or replacing the articles is by incorporating into the pole means for selectively permitting the pole to pivot about a substantially horizontal axis. In this way, the pole may be manually manipulated by a user to bring a remote end of the pole and thereby the article to a location sufficiently close to the user.

However, such poles may be in excess of 2 metres in length and as a consequence it may be difficult to safely manipulate the pole. In particular, there exists a significant risk of injury to persons adjacent the pole should the pole inadvertently fall.

An alternative known method of servicing or replacing the articles is to use a ladder. However, the use of ladders is particularly problematic in processing plants and refineries as the level of activity in the plant or refinery is generally high and the risk of unintentional dislodgment of the ladder is high.

Further elongate members for locating a light source in a location remote from a base position are disclosed in US 2,577,811 and in US 2,577,507. Another pole in excess of 2 metres in length is disclosed in US 5,171,088 or EP 0 459 847 A1. However, this known pole has a complicate structure. This prior art does not mention a specific range of an acute angle of rotation of 30°-60°, and does not disclose a fixing means arranged to releasably engage first and second plate members.

The present invention seeks, therefore, among other things, to provide an elongate member which overcomes at least some of the above mentioned disadvantages.

### SUMMARY OF THE PRESENT INVENTION

In accordance with the present invention, there is provided a pole with the features of claim 1.

### BRIEF DESCRIPTION OF THE DRAWINGS

The present invention will now be described, by way of example only, with reference to the accompanying drawings, in which:-
Figure 1 is a diagrammatic perspective view of an elongate member in accordance with the present invention.

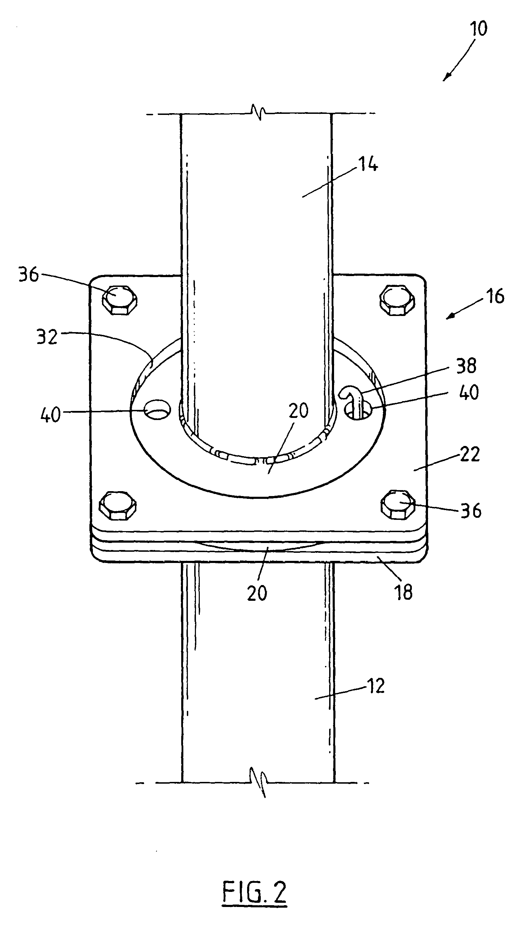

Figure 2 is a diagrammatic perspective view of a portion of the elongate member shown in Figure 1.
Figure 3 is a diagrammatic exploded cross sectional view of the elongate member shown in Figures 1 and 2;
Figure 4a is an upper plan view of a first plate member of an interconnecting means of the elongate member shown in Figures 1 to 3;
Figure 4b is a side view of the first plate member of Figure 4a;
Figure 5a is a lower plan view of a second plate member of an interconnecting means of the elongate member shown in Figure 1 to 3;
Figure 5b is a side view of the second plate member of Figure 5a;
Figure 6a is an upper plan view of a third plate member of an interconnecting means of the elongate member shown in figures 1 to 3:
Figure 6b is an upper plan view of third plate member of Figure 6a;
Figure 7 is a diagrammatic cross sectional view of the elongate member shown in Fissures 1, 2 and 3 with the elongate member shown in a first orientation and;
Figure 8 is a diagrammatic cross sectional view of the elongate member shown in Figure 1 and 2 with the elongate member shown in a second orientation.

### DESCRIPTION OF THE INVENTION

Referring to the drawings, there is shown an elongate member 10 for locating an article such as a light source 11 in a location upwardly of and remote from a base position 13 which may be on the ground or on an elevated platform

In this example, the article will be taken to be a light source 11. However, it will be appreciated that other articles are envisaged, for example a flag or an antenna.

The elongate member 10 includes a first elongate portion 12, a second elongate portion 14 and interconnecting means 16 which is disposed between the first elongate portion 12 and the second elongate portion 14.

The first elongate portion 12 is substantially cylindrical in shape and is fixed at a lower end to the base position 13, and extends upwardly of the base position 13 to the interconnecting means 16.

The second elongate portion 14 is substantially cylindrical in shape and extends from the interconnecting means 16 to the light source 11.

The interconnecting means 16 includes a first plate member 18 which is fixedly connected to an upper end of the first elongate portion 12 at an acute angle relative to a longitudinal axis of the first elongate portion 12 The first plate member 18 has an upper surface 19 which faces away from the first elongate portion 12. The interconnecting means 16 further includes a second plate member 20 which is fixedly connected to a lower end of the second portion 14 at an acute angle relative to a longitudinal axis of the second portion 14. The second plate member 20 has a lower surface 21 which faces away from the second elongate portion 14. The acute angle of the first plate member 18 is preferably equal to that of the second plate member 20, and preferably is in the range 30°-60°. The interconnecting means 16 also includes a fixing means including a third plate member 22 which is separate from the first elongate portion 12 and the second elongate portion 14.

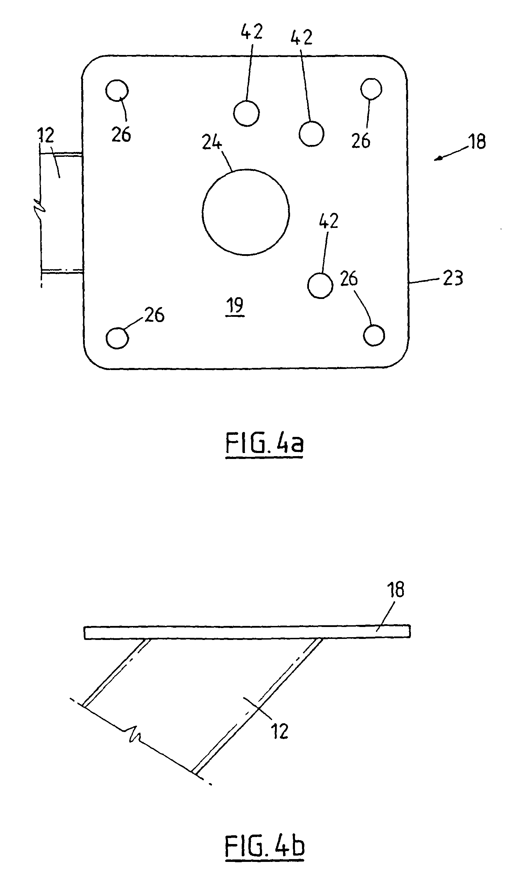

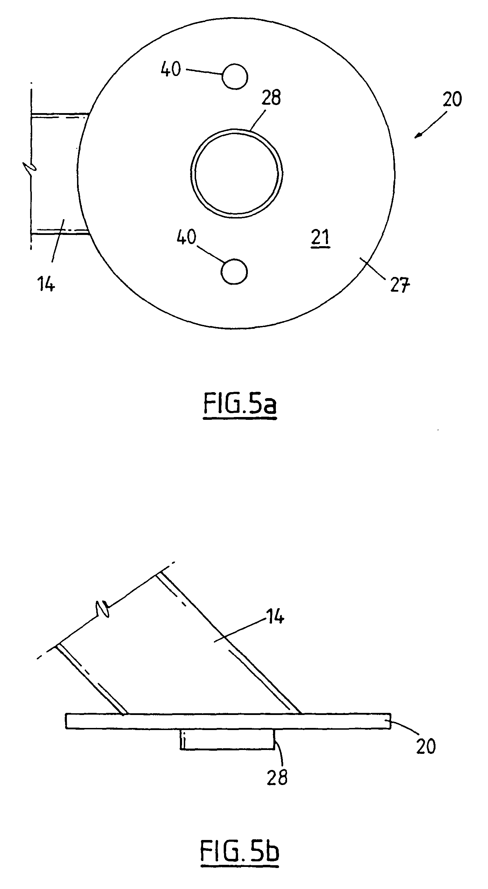

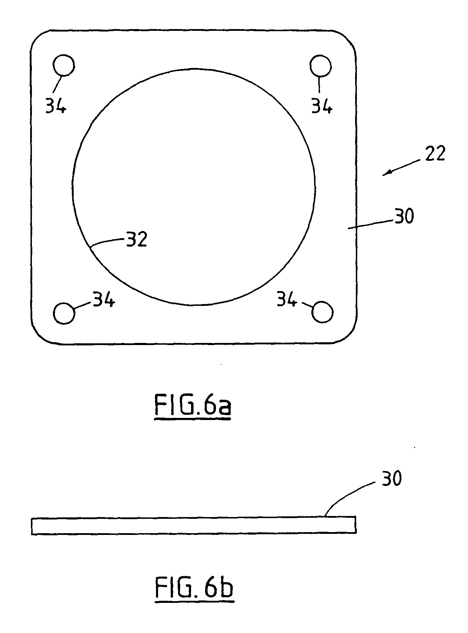

The first, second and third plate members 18, 20 and 22 are shown more particularly in Figures 4, 5 and 6. The first plate member 18 includes a first substantially square shaped portion 23 provided with a generally centrally disposed first aperture 24 and four second apertures 26 each of which is disposed adjacent a corner of the first square shaped portion 23.

The second plate member 20 includes a substantially circular shaped portion 27 and a substantially centrally disposed cylindrical portion 28. The cylindrical portion 28 is fixedly connected to the circular shaped portion 27 and extends outwardly of the lower face 21 of the second plate member 20. The outer diameter of the circular shaped portion is slightly smaller than the diameter of the first aperture 24.

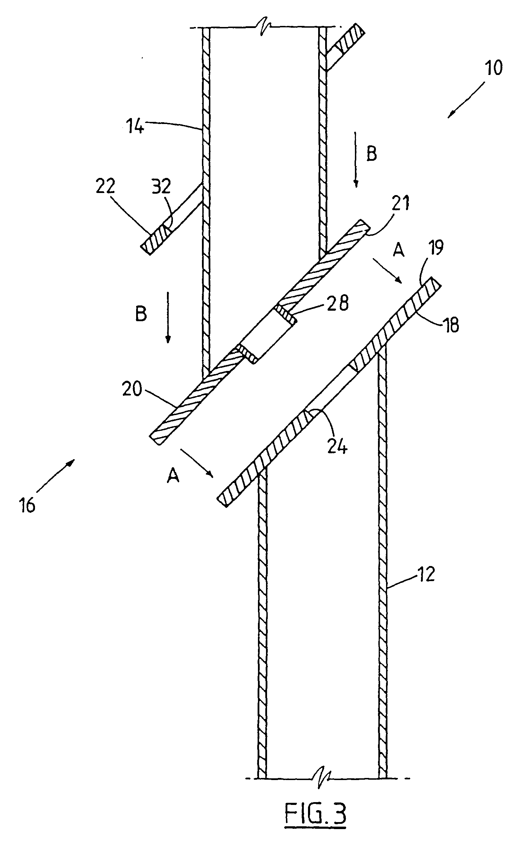

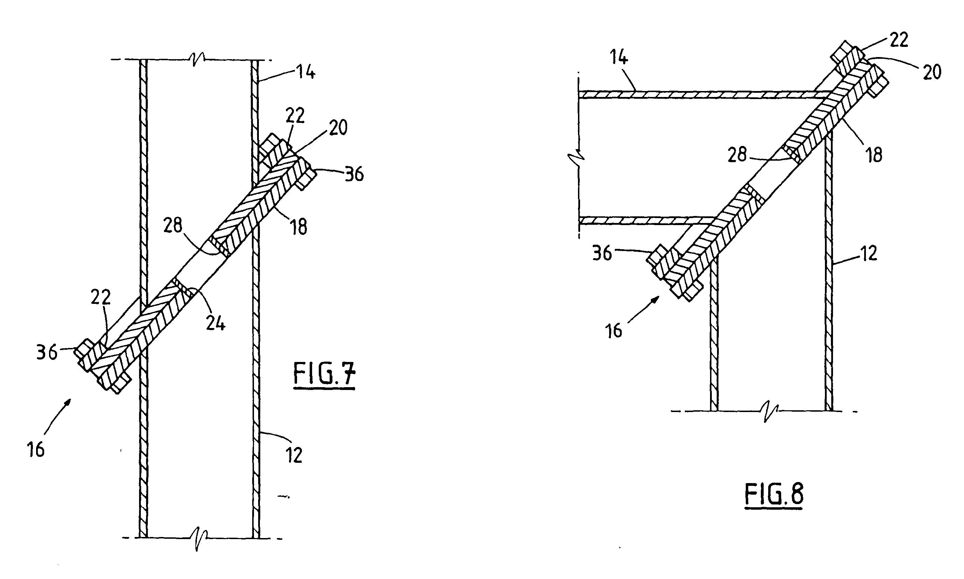

The third plate member 22 includes a second substantially square shaped portion 30 provided with a substantially centrally disposed third aperture 32 and four fourth apertures 34 each of which is disposed adjacent a corner of the second square shaped portion 30 The third aperture 32 is of larger diameter than the second elongate portion 14 The fourth apertures 24 are of similar diameter to the second apertures 26. The first and second plate members 18, 20 fit together with the upper surface 19 of the first plate member 18 adjacent the lower surface 21 of the second plate member 20, so that the cylindrical portion 28 of the second plate member 20 engages with the first, aperture 24 in the first plate member 18 as shown by the arrows A in Figure 3. The third plate member 22 is placed over the second plate 20 as shown by the arrows B in Figure 3 such that the first, second and third plate members 18, 20, 22 are disposed relative to each other as best shown in Figure 7. The first, second and third plate members 18, 20, 22 are fixed relative to each other by adjustable connection means 36. in this example nut and bolt arrangements which pass through the second and fourth apertures 26. 34 in the first and third plate members 18, 22 respectively. The adjustable connection means 36 act to restrict rotation of the first and third plate members 18, 22 relative to each other and to selectively permit or restrict rotation of the second plate member 20 and thereby the second elongate portion 14 about an axis perpendicular to the upper surface 19 of the first plate member 18.

It will be understood that when the adjustable connection means 36 are relaxed, the second plate member 20 and the second elongate portion 14 connected to the second plate member 20 are free to rotate relative to the first and third plate members 18, 22 and thereby relative to the first elongate portion 12, whilst the first and third plate members 18, 22 remain fixed relative to each other. When the adjustable connection means 36 are engaged, the second elongate portion 14 and the second plate 20 are not free to rotate relative to the first and third plates 18, 22. In order to facilitate rotation, it will be understood that the diameter of the third aperture 32 is sufficiently large to permit 360° rotation of the second portion 14 free of restriction.

The interconnecting means 16 may include a second fixing means provided by the use of a pin member 38. In this embodiment, the second plate member 20 includes two fifth apertures 40.

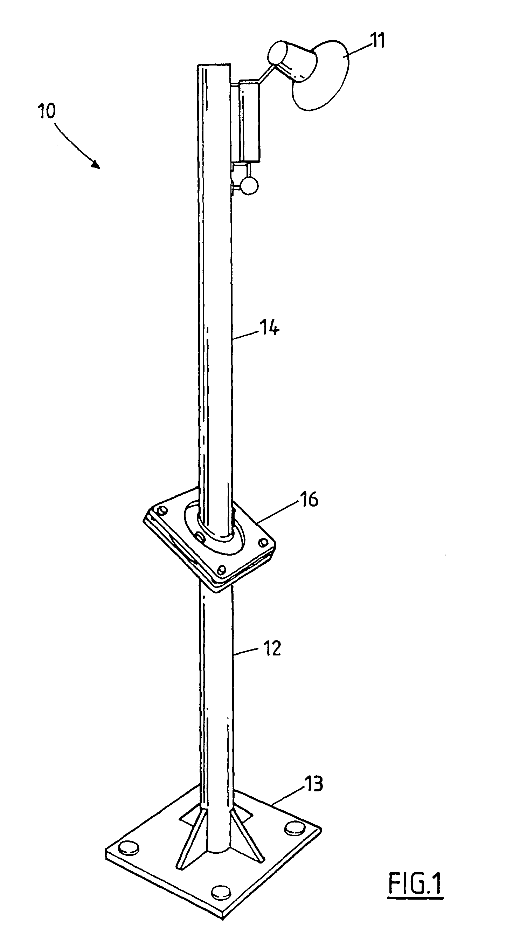

The fifth apertures 40 are arranged oppositely about the cylindrical portion 28, and are substantially equidistant from the cylindrical portion 28. The distance from the fifth apertures 40 to the centre of the cylindrical portion 28 is greater than the radius of the second elongate portion 14 and less than the radius of the third aperture 32 as seen in Figure 1

A Plurality of sixth apertures 42 are provided within the first plate member 18. The sixth apertures 42 are of similar diameter to the fifth apertures 42 The distance from each sixth aperture 42 to the centre of the first aperture 24 is substantially the same as the distance from the fifth apertures 40 to the centre of the cylindrical portion 28.

The fifth and sixth apertures 40 and 42 are arranged such that when the first and second plate members are disposed at particular orientations, a fifth aperture 40 is aligned with a sixth aperture 42. thus providing a hole within which the pin member 38 may be engaged.

In normal use the elongate member 10 locates in a first orientation as shown in Figure 1 and 7 wherein the first and second elongate portions 12, 14 are substantially parallel to each other and the light source 11 is disposed at a location relatively remote from the base position 13.

When it is desired to service or replace the light source 11, the pin member 38 is removed and the adjustable connection means 36 are released but not completely disengaged so as to permit rotation of the second plate member 20 relative to the first and third plate members 18, 22 As a result, the elongate member 10 is free to be moved by a user to a second orientation as shown in Figure 8 wherein the second elongate portion 14 is disposed at an angle, which may be substantially 90°, relative to the first elongate portion 12 and the light source 11 is located in a position closer to the base position 13. The pin member 38 may then be inserted into a fifth aperture 40 which is aligned with a sixth aperture 42.

It will be understood that by appropriate selection of the location of the interconnecting means relative to the first and second elongate portions 12, 14, the distance between the second elongate portion 14 and the base position 13 when the elongate member 10 is in the second orientation may be selected so that the second elongate portion 14 is disposed sufficiently close to the base position 13 to allow a user to service or replace the light source 11 whilst still being held sufficiently remote from the base position 13 to avoid potential injury to persons adjacent the elongate member 10 should the fixing means fail when the elongate member 10 is in the first position.

It will be understood that in the above described example, electrical wires would be provided to supply electrical power to the light source 11. The wires may pass internally of the first and second elongate portions 12, 14 from the base position 13 to the light source 11. In this way, the wires are less likely to be damaged during use.

It will be appreciated that whilst in this embodiment the first and second elongate portions 12, 14 are substantially cylindrical, they may be formed of members of any suitably shaped cross-section, for example square shaped cross-section, the important aspect being that the outer surface of the second elongate portion 14 does not restrict rotation of the second elongate portion 14 within the third aperture 32 of the third plate member 22.

## Claims

1. A pole (10) in excess of 2 metres length, configured to locate an article (11) remote from a base position (13), comprising a first elongate portion (12), the first elongate portion (12) extending, in use, from the base position (13), a second elongate portion (14) the second elongate portion (14) being arranged to receive the article (11), and interconnecting means (16) the interconnecting means (16) being arranged to connect the first elongate portion (12) to the second elongate portion (14) and to permit relative rotation of the first and second portions (12, 14) about an axis of rotation, the axis of rotation being disposed at an acute angle between 30° and 60° relative to a longitudinal axis of the first elongate portion (12), the interconnecting means (16) including a first plate member (18) fixedly attached to the first elongate portion (12) at an end remote from the base position (13), and a second plate member (20) fixedly attached to the second elongate portion (14) of an end remote from the article (11) wherein, in use, the first plate member (18) is located adjacent the second plate member (20), the interconnecting means (16) including a fixing means (22) the fixing means (22) arranged to releasably engage the first plate member (18) and the second plate member (20) such that, in use, when the first and second plate members (18, 20) are engaged by the fixing means (22) relative rotation of the first and second elongate portions (12,14) is restricted.

2. A pole (10) according to Claim 1, **characterised in that** the first plate member has an upper surface and the second plate member has a lower surface, the upper surface of the first plate member being adjacent the lower surface of the second plate member in use, and the axis of rotation is perpendicular to the upper surface of the first plate member.

3. A pole (10) according to Claim 1, **characterised in that** the fixing means includes a third plate member (22), the third plate member (22) including a centrally disposed aperture (32) and being arranged to locate, in use, about the second elongate portion (14) and adjacent the second plate member (20), wherein adjustable connection means (36) is arranged to connect the first plate member (18) and the third plate member (22) such that tightening of the adjustable connection means (36) engages the third plate member (22).

4. A pole (10) according to any one of Claims 1-3, **characterised in that** the first plate member (18) has at least one aperture (42), and the second plate member (20) has at least one aperture (40) and wherein the aperture (42) of the first plate member (18) is adjacent to the aperture (40) of the second plate member (20) when the first elongate portion (12) and the second elongate portion (14) are arranged in a particular position, and wherein the interconnecting means (16) includes a pin member (38) arranged, in use, to locate within the aperture (42) of the first plate member (18) and the aperture (40) of the second plate member (20) and thus restrict relative rotation of the first elongate portion (12) and the second elongate portion (14).

5. A pole (14) according to Claim 4, **characterised in that** the second plate member (20) has a first aperture (40) and a second aperture (40) and wherein rotation of the second elongate portion (14) relative to the first elongate portion (12) causes the aperture (42) of the first plate member (18) initially adjacent the first aperture (40) of the second plate member (20) to be subsequently adjacent the second aperture (40) of the second plate member (20).

6. A pole (10) according to any one of the preceding Claims, **characterised in that** the interconnecting means (16) includes a cylindrical portion arranged to be coaxial with the axis of rotation, and wherein the cylindrical portion extends from one of the first and second elongate portions (12, 14) and wherein the other of the first and second portions (12, 14) includes an aperture arranged to receive the cylindrical portion

7. A pole (10) according to any one of the preceding Claims, **characterised in that** the article includes a light source.

## Patentansprüche

1. Mast (10) mit einer Länge von mehr als 2 Metern, der zum Positionieren eines von einer Grundposition (13) entfernt befindlichen Artikels (11) ausgebildet ist, mit einem ersten länglichen Abschnitt (12), wobei sich der erste langgestreckte Abschnitt (12) im Gebrauch von der Grundposition (13) erstreckt, einem zweiten länglichen Abschnitt (14), wobei der zweite langgestreckte Abschnitt (14) zum Aufnehmen des Artikels (11) gestaltet ist, und einem Verbindungsmittel (16), wobei das Verbindungsmittel (16) zum Verbinden des ersten länglichen Abschnitts (12) mit dem zweiten länglichen Abschnitt (14) und zum Ermöglichen einer Relativdrehung des ersten und zweiten Abschnitts (12, 14) um eine Drehachse angeordnet ist, wobei die Drehachse in einem spitzen Winkel zwischen 30° und 60° relativ zu einer Längsachse des ersten länglichen Abschnitts (12) angeordnet ist, wobei das Verbindungsmittel (16) ein erstes Plattenelement (18), das an dem ersten länglichen Abschnitt (12) an einem von der Grundposition (13) entfernt befindlichen Ende fest angebracht ist, und ein zweites Plattenelement (20), das an dem zweiten länglichen Abschnitt (14) an einem entfernt von dem Artikel (11) befindlichen Ende angebracht ist, beinhaltet, wobei im Gebrauch das erste Plattenelement (18) sich neben dem zweiten Plattenelement (20) befindet, wobei das Verbindungsmittel (16) ein Befestigungsmittel (22) beinhaltet, wobei das Befestigungsmittel (22) zum lösbaren Zusammenhalten des ersten Plattenelements (18) und des zweiten Plattenelements (20) so angeordnet ist, dass im Gebrauch, wenn das erste und das zweite Plattenelement (18, 20) durch das Befestigungsmittel (22) zusammengehalten werden, ein Gegeneinanderverdrehen des ersten und zweiten länglichen Abschnitts (12, 14) eingeschränkt ist.

2. Mast (10) nach Anspruch 1, **dadurch gekennzeichnet, dass** das erste Plattenelement eine Oberseite und das zweite Plattenelement eine Unterseite aufweist, wobei die Oberseite des ersten Plattenelements während des Gebrauchs an der Unterseite des zweiten Plattenelements liegt und die Drehachse zu der Oberseite des ersten Plattenelements senkrecht steht.

3. Mast (10) nach Anspruch 1, **dadurch gekennzeichnet, dass** das Befestigungsmittel ein drittes Plattenelement (22) beinhaltet, wobei das dritte Plattenelement (22) eine mittig angeordnete Öffnung (32) beinhaltet und im Gebrauch zum Anordnen um den zweiten länglichen Abschnitt (14) herum und benachbart zu dem zweiten Plattenelement (20) gestaltet ist, wobei ein regulierbares Verbindungsmittel (36) zum Miteinanderverbinden des erstes Plattenelements (18) und des dritten Plattenelements (22) so angeordnet ist, dass das Festziehen des regulierbaren Verbindungsmittels (36) das dritte Plattenelement (22) hält.

4. Mast (10) nach einem der Ansprüche 1 bis 3, **dadurch gekennzeichnet, dass** das erste Plattenelement (18) wenigstens eine Öffnung (42) aufweist und das zweite Plattenelement (20) wenigstens eine Öffnung (40) aufweist, und wobei die Öffnung (42) des ersten Plattenelements (18) sich neben der Öffnung (40) des zweiten Plattenelements (20) befindet, wenn der erste langgestreckte Abschnitt (12) und der zweite langgestreckte Abschnitt (14) in einer bestimmten Stellung angeordnet sind, und wobei das Verbindungsmittel (16) einen Stift (38) beinhaltet, der im Gebrauch in der Öffnung (42) des ersten Plattenelements (18) und der Öffnung (40) des zweiten Plattenelements (20) zu platzieren ist und folglich ein Gegeneinanderverdrehen des ersten länglichen Abschnitts (12) und des zweiten länglichen Abschnitts (14) einschränkt.

5. Mast (10) nach Anspruch 4, **dadurch gekennzeichnet, dass** das zweite Plattenelement (20) eine erste Öffnung (40) und eine zweite Öffnung (40) aufweist und wobei ein Drehen des zweiten länglichen Abschnitts (14) relativ zu dem ersten länglichen Abschnitt (12) bewirkt, dass eine ursprünglich neben der ersten Öffnung (40) des zweiten Plattenelements (20) befindliche Öffnung (42) des ersten Plattenelements (18) daraufhin sich neben der zweiten Öffnung (40) des zweiten Plattenelements (20) befindet.

6. Mast (10) nach einem der vorhergehenden Ansprüche, **dadurch gekennzeichnet, dass** das Verbindungsmittel (16) einen zylindrischen Abschnitt beinhaltet, der koaxial zu der Drehachse angeordnet ist, und wobei sich der zylindrische Abschnitt von dem ersten oder dem zweiten Abschnitt (12, 14) erstreckt, und wobei der andere des ersten oder zweiten Abschnitts (12, 14) eine zum Aufnehmen des zylindrischen Abschnitts angeordnete Öffnung aufweist.

7. Mast (10) nach einem der vorhergehenden Ansprüche, **dadurch gekennzeichnet, dass** der Artikel eine Lichtquelle beinhaltet.

## Revendications

1. Mât (10) de plus de 2 mètres de long, configuré pour placer un article (11) à distance d'une position de base (13), comprenant une première partie allongée (12), la première partie allongée (12) s'étendant, en service, de la position de base (13), une seconde partie allongée (14), la seconde partie allongée (14) étant aménagée pour recevoir l'article (11), et des moyens d'interconnexion (16), les moyens d'interconnexion (16) étant aménagés pour raccorder la première partie allongée (12) à la seconde partie allongée (14) et pour permettre une rotation relative des première et seconde parties (12, 14) autour d'un axe de rotation, l'axe de rotation étant disposé de manière à faire un angle aigu de 30° à 60° par rapport à un axe longitudinal de la première partie allongée (12), les moyens d'interconnexion (16) comprenant un premier élément en plaque (18) fixé à demeure au premier partie allongé (12) à une extrémité distante de la position de base (13), et un deuxième élément en plaque (20) fixé à demeure au second partie allongé (14) à une extrémité distante de l'article (11), dans lequel, en service, le premier élément en plaque (18) est placé adjacent au deuxième élément en plaque (20), les moyens d'interconnexion (16) comprenant un moyen de fixation (22), le moyen de fixation (22) étant aménagé pour s'engager de manière libérable sur le premier élément en plaque (18) et le deuxième élément en plaque (20) de sorte que, en service, lorsque les premier et deuxième éléments en plaque (18, 20) sont engagés par le moyen de fixation (22), la rotation relative des premier et deuxième partie allongés (12, 14) soit limitée.

2. Mât selon la revendication 1, **caractérisé en ce que** le premier élément en plaque a une surface supérieure et le deuxième élément en plaque a une surface inférieure, la surface supérieure du premier élément en plaque étant adjacent à la surface inférieure du deuxième élément en plaque en service, et l'axe de rotation est perpendiculaire à la surface supérieure du premier élément en plaque.

3. Mât (10) selon la revendication 1, **caractérisé en ce que** le moyen de fixation comprend un troisième élément en plaque (22), le troisième élément en plaque (22) comprenant une ouverture (32) disposée au centre et ménagée pour se situer, en service, autour de la seconde partie allongée (14) et adjacente au deuxième élément en plaque (20), dans lequel des moyens de raccordement ajustables (36) sont aménagés pour raccorder le premier élément en plaque (18) et le troisième élément en plaque (22) de sorte que le serrage des moyens de raccordement ajustables (36) engage le troisième élément en plaque (22).

4. Mât (10) selon l'une quelconque des revendications 1 à 3, **caractérisé en ce que** le premier élément en plaque (18) a au moins une ouverture (42) et le deuxième élément en plaque (20) a au moins une ouverture (40), et dans lequel l'ouverture (42) du premier élément en plaque (18) est adjacente à l'ouverture (40) du deuxième élément en plaque (20) lorsque la première partie allongée (12) et la seconde partie allongée (14) sont aménagées dans une position particulière, et dans lequel les moyens d'interconnexion (16) comprennent un élément de broche (38), en service, à placer dans l'ouverture (42) du premier élément en plaque (18) et l'ouverture (40) du deuxième élément en plaque (20) et restreignent donc la rotation relative du premier partie allongé (12) et du second partie allongé (14).

5. Mât (10) selon la revendication 4, **caractérisé en ce que** le deuxième élément en plaque (20) a une première ouverture (40) et une seconde ouverture (40) et dans lequel la rotation du second partie allongé (14) par rapport au premier partie allongé (12) a cette conséquence que l'ouverture (42) du premier élément en plaque (18) initialement adjacent à la première ouverture (40) du deuxième élément en plaque (20) est par suite adjacente à la seconde ouverture (40) du deuxième élément en plaque (20).

6. Mât (10) selon l'une quelconque des revendications précédentes, **caractérisé en ce que** les moyens d'interconnexion (16) comprennent une partie cylindrique aménagée pour être coaxiale à l'axe de rotation, et dans lequel la partie cylindrique s'étend d'une des première et seconde parties allongées (12, 14) et dans lequel l'autre des première et seconde parties allongées (12, 14) comprend une ouverture ménagée pour recevoir la partie cylindrique.

7. Mât (10) selon l'une quelconque des revendications précédentes, **caractérisé en ce que** l'article comprend une source de lumière.
